# EUROPEAN PATENT APPLICATION

(11) **EP 4 768 675 A1**
(43) Date of publication of application: **01.07.2026**
(21) Application number: 25222982.8
(22) Date of filing: 12.12.2025
(51) Int. Cl.: E04F 10/10

(54) **RETRACTABLE, ADJUSTABLE PHOTOVOLTAIC BIOCLIMATIC PERGOLA**

(30) Priority: 27.12.2024 ES 202432398 U
(71) Applicant: Pérez Fernández-Espada, Carlos Ildefonso, Sevilla (ES); Olmo Ruiz, José, Sevilla (ES); Fuentes Fernández, Alberto, Sevilla (ES)
(72) Inventor: Pérez Fernández-Espada, Carlos Ildefonso, Sevilla (ES); Olmo Ruiz, José, Sevilla (ES); Fuentes Fernández, Alberto, Sevilla (ES)
(74) Representative: Sánchez Paulino, Francisco Javier

(57) **Abstract**

The invention relates to a retractable, adjustable photovoltaic bioclimatic pergola comprising a set of slats (1) incorporating photovoltaic cells (2) designed to capture solar radiation and convert it into electrical energy. The slats are connected to a transmission system (3) enabling controlled movement.

## Description

### PURPOSE OF THE INVENTION

The purpose of the present invention, as indicated by its title, is a retractable, adjustable photovoltaic bioclimatic pergola that can produce electrical energy. This innovation introduces advantages previously unknown within existing technologies.

The invention is defined by the combined characteristics of its structural and functional components, which together form a pergola system capable of regulating natural light and shade while simultaneously generating electrical energy. The proposed configuration delivers a versatile, efficient and durable solution suitable for outdoor architectural applications.

### TECHNICAL FIELD

Accordingly, the present invention falls within the field of bioclimatic pergolas.

### BACKGROUND OF THE INVENTION

In recent years, architectural design and energy-efficiency solutions have converged in innovative developments aimed at optimising the use of natural resources and improving quality of life. Among these innovations, bioclimatic pergolas have gained prominence as architectural elements combining aesthetics, functionality and sustainability. In this context, the development of a retractable, orientable bioclimatic pergola equipped with photovoltaic cells represents a significant step forward, both in design and in energy utilisation.

Bioclimatic pergolas emerged as architectural solutions designed to regulate climatic conditions in outdoor spaces. Unlike traditional pergolas, these structures integrate mobile or adjustable systems that allow control of sunlight, ventilation and protection from rain. Their design is based on bioclimatic principles, meaning they aim to adapt to the natural environment to reduce energy consumption and improve thermal comfort.

Increasing concern over climate change and the transition toward renewable-energy sources has led to the integration of photovoltaic panels into various architectural structures. Photovoltaic panels convert solar energy into clean, renewable electricity, making them an ideal solution for reducing carbon footprints.

In the case of bioclimatic pergolas, the incorporation of photovoltaic panels not only adds an energy-generation function but also optimises the use of available space. Installing panels on the slats or upper surfaces of the pergola creates a multifunctional structure that combines thermal comfort, climatic protection and sustainable energy generation.

As a reference to the current state of the art, it should be noted that, although various bioclimatic pergola designs are known, none is known to present structural and constitutive technical characteristics identical or similar to those claimed in the present invention.

### DISCLOSURE OF THE INVENTION

The invention relates to a retractable, adjustable photovoltaic bioclimatic pergola that represents an innovative solution combining design, functionality and sustainability. This advanced system not only provides shade and comfort in outdoor spaces but also integrates photovoltaic technology for renewable-energy generation.

Specifically, the invention proposes, as noted above, a retractable, adjustable photovoltaic bioclimatic pergola comprising a set of slats designed to fulfil multiple functions. These slats incorporate photovoltaic cells that capture solar radiation and convert it into electrical energy. This design allows the pergola to function as both a practical architectural element and a source of clean energy generation.

The slats are connected to a transmission system that enables controlled movement. This system is complemented by an orientation mechanism that adjusts the slat angle based on user preference or climatic conditions. Owing to this functionality, the slats may be fully extended to provide shade or retracted to allow total passage of natural light.

The supporting structure has been designed to ensure stability and durability, even under adverse weather conditions such as strong wind or heavy rain. This approach guarantees optimal performance and long service life.

One of the most notable features of this pergola is the ability of the slats to rotate through different angles. This adjustable orientation allows optimisation of solar capture throughout the day, maximising the efficiency of the integrated photovoltaic cells. For instance, during periods of highest sunlight intensity, the slats may be positioned to capture maximum radiation. Furthermore, the slats may retract at a negative incline, helping to prevent breakage.

The integrated photovoltaic cells generate direct-current electricity, which is converted into alternating current by an inverter. This device not only renders the energy compatible with conventional electrical systems but also synchronises the alternating-current waveform with the electrical grid to ensure safe and efficient integration.

The inverter is connected to an electrical system that plays a key role in energy management. This system monitors both energy generation and consumption in real time, allowing optimal distribution of electricity. For example, if more energy is generated during the day than is needed, the system automatically redirects the surplus to an energy-storage system, typically composed of high-capacity batteries. This allows electricity to be stored for later use, such as at night or on cloudy days.

The retractable, adjustable photovoltaic bioclimatic pergola may be operated manually or automatically, depending on the specific design and user preferences. In automatic mode, the system may be programmed to adjust the slat orientation or manage the generated energy according to predefined configurations. This enhances user experience while maximising comfort and energy efficiency.

The integration of photovoltaic cells converts the pergola into a source of renewable energy, reducing dependence on unsustainable sources. The ability to adjust the slat orientation allows control over sunlight incidence and shading as needed. By generating its own electricity and storing surplus energy, the system helps reduce energy costs in the home or installation site.

The integrated photovoltaic cells allow the generation of clean, renewable energy, reducing dependence on conventional energy sources and lowering carbon emissions.

Unless otherwise stated, all technical and scientific terms used in this specification carry the meaning commonly understood by a person skilled in the art to which this invention pertains. In implementing this invention, procedures and materials similar or equivalent to those described in this specification may be used.

### BRIEF DESCRIPTION OF THE FIGURES

To complement the description provided and aid in understanding the invention's characteristics, this specification is accompanied by illustrative, non-limiting figures, which form an integral part of the document and depict the following:

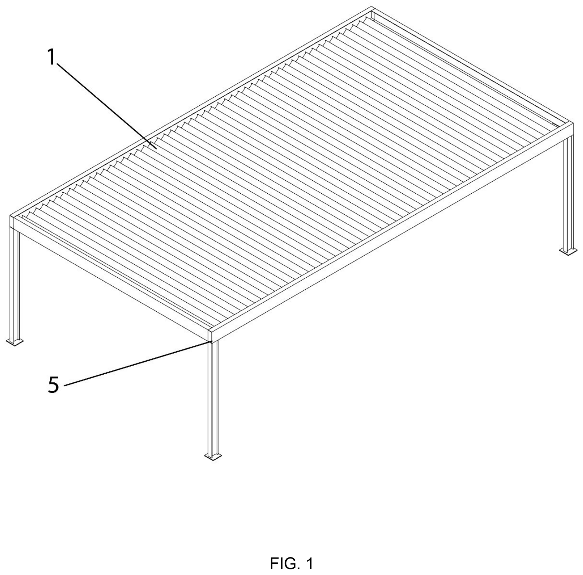

Figure 1 is a perspective representation of the retractable, adjustable photovoltaic bioclimatic pergola with the slats (1) extended and tilted.

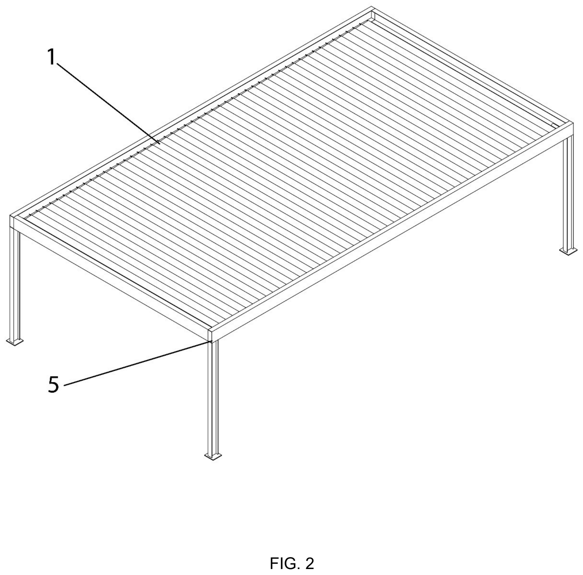

Figure 2 is a perspective representation of the retractable, adjustable photovoltaic bioclimatic pergola with the slats (1) extended and tilted in a fully closed position.

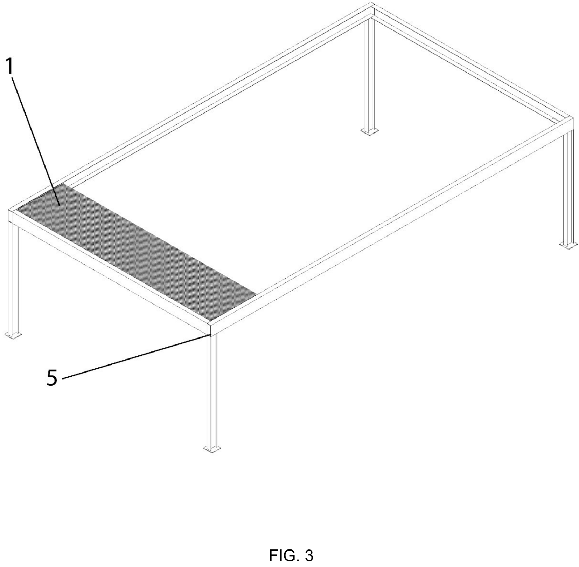

Figure 3 is a perspective representation of the retractable, adjustable photovoltaic bioclimatic pergola with the slats (1) retracted.

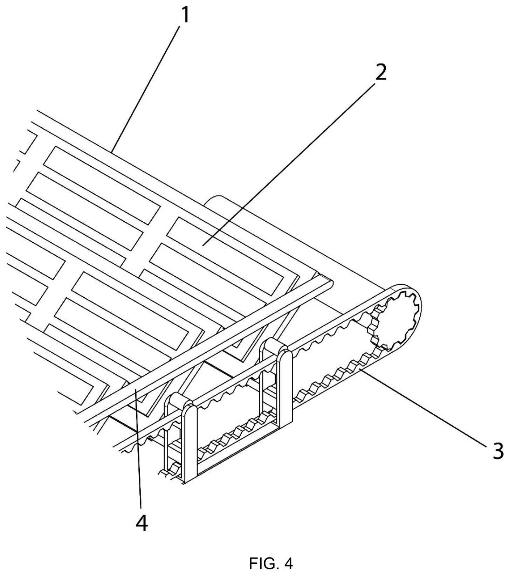

Figure 4 is a perspective representation of the transmission system (3) and orientation system (4) of the retractable, adjustable photovoltaic bioclimatic pergola.

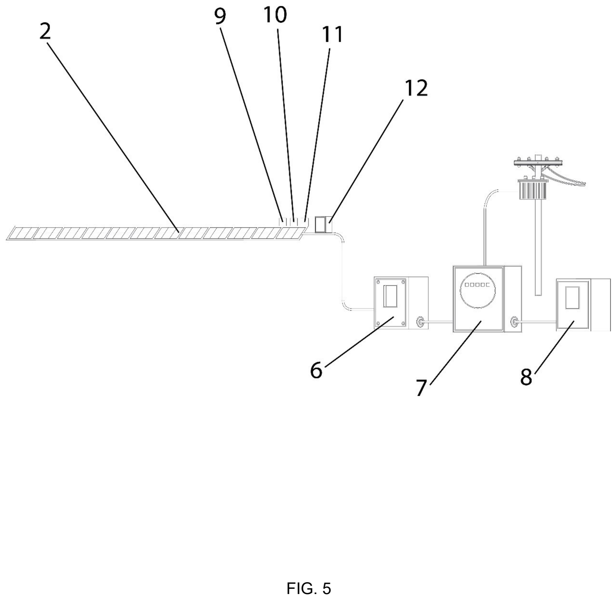

Figure 5 is a schematic representation of the retractable, adjustable photovoltaic bioclimatic pergola.

### PREFERRED EMBODIMENT OF THE INVENTION

As shown in the figures, the pergola comprises a set of slats (1), which constitute the main element of the structure. These slats (1) incorporate photovoltaic cells (2) designed to capture solar radiation and convert it into electrical energy.

The slats (1) are connected to a transmission system (3) that enables controlled movement. This system (3) includes lateral rails along which the slats (1) slide. The transmission system (3) is complemented by an orientation system (4) that adjusts the slat angle according to user needs or weather conditions. The mechanism includes gears and racks that allow uniform tilting of the slats (1). The slats (1) may extend to fully cover the interior space of the pergola, providing shade and reducing direct solar incidence. Conversely, they may retract to occupy minimal space and allow full entry of light when desired.

The supporting structure (5) is designed to ensure stability and durability, even under adverse weather conditions.

Additionally, the slats (1) are orientable, allowing adjustment of solar incidence based on the needs of the photovoltaic cells (2). These slats (1) are designed to rotate through different angles, optimising solar capture according to the sun's position throughout the day, thereby improving performance of the integrated photovoltaic cells (2).

Because of this adjustable orientation, the photovoltaic cells (2) can be positioned to capture maximum solar radiation during peak sunlight hours. The slats (1) may also be retracted at a negative incline.

The photovoltaic cells (2) are connected to an inverter (6), an essential device that transforms the direct current generated by the photovoltaic cells (2) into alternating current compatible with conventional electrical systems. The inverter (6) also synchronises the alternating-current waveform with the electrical grid, ensuring smooth and safe integration.

The inverter (6) is linked to an electrical system (7) that plays a crucial role in energy management. The electrical system (7) monitors in real time both the consumption and the electricity generated by the photovoltaic cells (2). Through this information and owing to its bidirectional communication with the inverter (6),the system can optimise energy distribution based on configured parameters.

When the pergola generates more energy than is consumed onsite, the electrical system automatically redirects the surplus to an energy-storage system (8) or to the electrical grid.

Depending on the embodiment, the retractable, adjustable photovoltaic bioclimatic pergola may be operated manually or automatically, adapting to user needs and preferences.

The pergola incorporates advanced sensors that work in conjunction with a central controller. These sensors enable the structure to adjust automatically to environmental conditions, ensuring comfort, safety and durability.

The pergola includes a rain sensor (9) that accurately detects precipitation. Upon detecting raindrops, this sensor sends a signal to the controller (12), which immediately closes the slats (1). This mechanism ensures that the area beneath the pergola remains dry and protected, even during unexpected rainfall, preventing damage to furniture and to the structure itself.

The pergola includes a wind sensor (10) designed to measure wind speed and force in real time. When this sensor detects strong gusts that could compromise structural integrity, the controller (12) sends a signal to retract the slats (1) completely. This preventive mechanism minimises the risk of structural damage and ensures system stability under extreme weather conditions.

To maximise comfort and energy efficiency, the pergola includes a light sensor (11) that measures sunlight intensity and orientation. Based on this information, the controller (12) automatically adjusts the angle of the slats (1), regulating the amount of shade or direct light according to the sun's position.

In addition to the above sensors, the retractable, adjustable photovoltaic bioclimatic pergola may be integrated with home-automation systems for more advanced control. For example, users may programme customised schedules or control the slats via mobile applications or voice commands. This flexibility makes the pergola an ideal solution for modern homes, commercial spaces and recreational areas.

Once the nature of the present invention and the way in which it is carried out have been sufficiently described, no further explanation is considered necessary for a skilled person to understand its scope and advantages. It is understood that, within its essential features, it may be implemented in other embodiments differing in detail from the one described by way of example, without altering its fundamental principle.

## Claims

1. A retractable, adjustable photovoltaic bioclimatic pergola comprising a set of slats (1) connected to a transmission system (3) complemented by an orientation system (4) that adjusts the angle of the slats (1), **characterised in that** the slats (1) comprise photovoltaic cells (2).

2. The retractable, adjustable photovoltaic bioclimatic pergola according to the preceding claim, **characterised in that** it comprises an inverter (6) linked to an electrical system (7).

3. The retractable, adjustable photovoltaic bioclimatic pergola according to the preceding claim, **characterised in that** the electrical system (7) transmits energy to an energy-storage system (8) or to the electrical grid.

4. The retractable, adjustable photovoltaic bioclimatic pergola according to any of the preceding claims, **characterised in that** it comprises a controller (12) configured to control the operation of the slats (1).

5. The retractable, adjustable photovoltaic bioclimatic pergola according to the preceding claim, **characterised in that** it comprises a rain sensor (9) configured to detect precipitation and send a signal to the controller (12) to close the slats (1).

6. The retractable, adjustable photovoltaic bioclimatic pergola according to claim 5, **characterised in that** it comprises a wind sensor (10) configured to measure wind speed and force in real time and send a signal to the controller (12) to retract the slats (1) completely in the event of strong wind.

7. The retractable, adjustable photovoltaic bioclimatic pergola according to claim 5, **characterised in that** it comprises a light sensor (11) configured to measure sunlight intensity and the sun's orientation and send a signal to the controller (12) for automatic adjustment of the slats (1).

8. The retractable, adjustable photovoltaic bioclimatic pergola according to any of the preceding claims, **characterised in that** the slats (1) retract at a negative incline.
